# FASCICULE DE BREVET EUROPEEN

(11) **EP 2 469 691 B1**
(45) Date de publication et mention de la délivrance du brevet: **21.09.2016**
(21) Numéro de dépôt: 10306513.2
(22) Date de dépôt: 24.12.2010
(51) Int. Cl.: H02K 15/04

(54) **Un procédé de bobinage d'un stator et un stator**
Wicklungsverfahren eines Stators, und entsprechender Stator
Method for winding a stator and stator

(43) Date de publication de la demande: 27.06.2012
(73) Titulaire: Pompes Salmson, 78400 Chatou (FR)
(72) Inventeur: Signori, Gilles, 35740 Pace (FR); Bouilly, Hervé, 53940 Le Genest St. Isle (FR); Leze, Adrien, 53940 Saint Berthevin (FR)
(74) Mandataire: Hirsch & Associés

(56) Documents cités:
- JP-A- 61 001 236
- US-A1- 2002 011 755
- US-A1- 2005 133 655
- US-B2- 7 391 294

## Description

La présente invention concerne un procédé de bobinage d'un stator et concerne un stator. Dans l'état de la technique, le document US 2002/011755 divulgue une méthode de construction d'un élément enroulé segmenté pour un dispositif électromécanique. Il y a un besoin pour bobiner un stator de manière simple.

Pour cela, l'invention propose un procédé de bobinage d'un stator, le stator comprenant
- des supports de bobines et
- une bague comportant des branches de réception des supports de bobine, les branches s'étendant radialement vers l'extérieur de la bague, le procédé comprenant le bobinage d'au moins deux supports de bobine à l'aide d'un fil continu.

Selon une variante, le bobinage avec le fil continu est réalisé sur les supports de bobine dans une position en retrait d'une position emboîtée des branches dans les supports.

Selon une variante, la position en retrait des supports correspond à une position des supports décalée radialement par rapport à la bague et par rapport à la position emboîtée des branches dans les supports.

Selon une variante,
- le bobinage des supports de bobines est réalisé par l'intermédiaire d'une coupelle portant une connectique d'alimentation du stator
- le maintien des supports de bobine à la bague est réalisé par un élément annulaire, la connectique d'alimentation du stator étant à l'intérieur du périmètre intérieur de l'élément annulaire.

Selon une variante, dans une position emboîtée des supports sur la bague, les supports de bobine maintiennent en tension au moins un brin de fil continu parmi le brin de fil parvenant au support de bobine et le brin de fil provenant du support de bobine, de préférence les deux brins.

Selon une variante, les supports de bobine comprennent
- une lumière adaptée à recevoir la branche respective de la bague,
- une piste d'enroulement du fil autour de la lumière,
- une saillie de mise en tension d'au moins un brin de fil continu parmi le brin de fil parvenant au support de bobine et le brin de fil provenant du support de bobine, de préférence les deux brins.

Selon une variante, le bobinage du fil est réalisé par bobinage successif des supports et par connexion du fil avec une connectique d'alimentation du stator qui est portée par une coupelle.

Selon une variante, le procédé comprend en outre la section du fil continu entre deux phases de la connectique d'alimentation.

Selon une variante, deux supports de bobine bobinés avec le fil continu appartiennent à une même phase du stator ou à deux phases différentes du stator.

Selon une variante, la bague est monobloc.

Il est aussi proposé un stator obtenu par le procédé décrit précédemment, ledit stator comprenant
- des supports de bobines,
- une coupelle maintenant une connectique d'alimentation du stator,
- des supports de bobines bobinées à l'aide d'un fil continu entre au moins deux supports de bobine par l'intermédiaire de la coupelle,
- une bague comportant des branches de réception des supports de bobine, les branches s'étendant radialement vers l'extérieur de la bague.

Selon une variante, la coupelle ayant un passage de rotor et ayant un disque de maintien de la connectique d'alimentation du stator, les supports étant sous le disque dans une position d'emboîtement des branches dans les supports, selon une vue le long d'un axe du passage de rotor.

Selon une variante, les supports de bobine comportent une piste d'enroulement du fil qui est sous la coupelle dans la position d'emboîtement des branches dans les supports, selon une vue le long de l'axe du passage de rotor.

D'autres caractéristiques et avantages de l'invention apparaîtront à la lecture de la description détaillée qui suit des modes de réalisation de l'invention, donnés à titre d'exemple uniquement et en références aux dessins qui montrent :
- figure 1, une vue d'un stator;
- figure 2, une vue d'une bague du stator de la figure 1 ;
- figure 3, une vue d'un support de bobine du stator de la figure 1 ;
- figures 4-6, des vues partielles du stator de la figure 1 ;
- figure 7, une vue de l'enroulement d'un fil d'alimentation du stator de la figure 1.

Il est proposé un procédé de bobinage d'un stator, le stator comprenant des supports de bobines et une bague comportant des branches de réception des supports de bobine, les branches s'étendant radialement vers l'extérieur de la bague. Le procédé comprend le bobinage d'au moins deux supports de bobine à l'aide d'un fil continu. La bague est un composant rassemblant les pôles du stator ce qui permet la réalisation du bobinage à l'aide d'un seul composant formant pôles sans devoir réaliser la jonction entre deux supports de bobine à l'aide d'un organe de connexion. Le bobinage est donc simple.

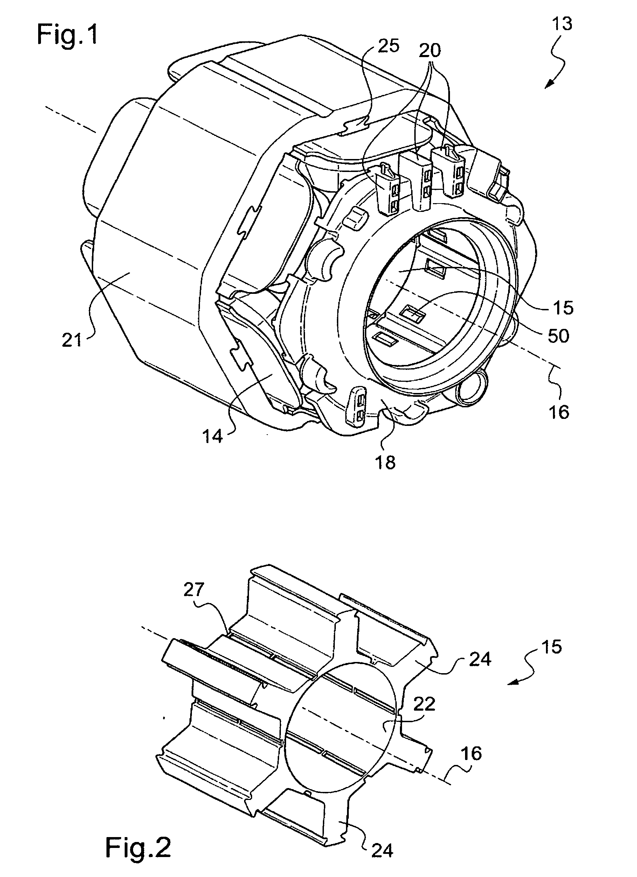

La figure 1 montre un stator 13. Le stator 13 comporte une bague 15 (mieux visible sur la figure 2). La bague 15 reçoit des supports 14 de bobine. Un courant circulant dans les bobines permet la création d'un champ magnétique permettant d'entraîner en rotation un rotor non visible sur les figures placé dans le passage du stator le long de l'axe 16. Le stator 13 comporte en outre une coupelle 18 portant une connectique 20 d'alimentation du stator 13. Grâce à la coupelle 18, la connectique 20 d'alimentation est à l'extérieur du cylindre représenté par l'évidement du passage de rotor le long de l'axe 16 à travers la bague 15 et la coupelle 18. Ceci assure que la connectique 20 n'entrave pas le passage du rotor le long de l'axe 16. Selon la figure 1, les supports 14 sont maintenus en place sur la bague 15 à l'aide d'un élément annulaire 21. L'élément annulaire est un empilage de tôles dit « paquet-anneau ». L'élément annulaire permet la fermeture du champ magnétique de sorte à conduire le champ magnétique vers l'intérieur du stator. En outre, la connectique 20 est portée par la coupelle de sorte que la connectique 20 soit à l'intérieur du périmètre intérieur de l'élément annulaire. Ceci permet un encombrement radial du stator et de la connectique limité, permettant non seulement une introduction aisée dans l'élément annulaire 21 et un encombrement réduit dans le moteur.

La figure 2 montre la bague 15 de la figure 1. La bague 15 est un empilage de tôles constitué de n pôles. La bague 15 est un rassemblement de pôles permettant la gestion d'un seul composant portant tous les pôles plutôt que la gestion d'autant de pôles en pièces séparées. On obtient ainsi un gain en manutention du composant, une meilleure robustesse du composant manipulé et une gestion plus simple du composant. La bague 15 peut avoir un corps 22 cylindrique et des branches 24 en saillie du corps 22 vers l'extérieur. La bague 15 peut avoir une forme en étoile (dit « paquet-étoile »). Les branches forment les pôles du stator lorsque celui-ci est alimenté. Les branches 24 sont destinées à porter les supports 14 de bobine. La figure 2 montre à titre d'exemple 6 branches. Le corps 22 permet le passage le long de l'axe 16 du rotor et ses éléments de pivotement non visibles dans l'évidement central. La bague 15 et les branches 24 peuvent être monobloc, ce qui en facilite la gestion et la manipulation. Pour cela, chaque branche est reliée aux branches voisines par des jonctions 27. Le nombre de jonctions 27 est limité pour éviter des pertes magnétiques par court-circuit du champs magnétique entre les pôles.

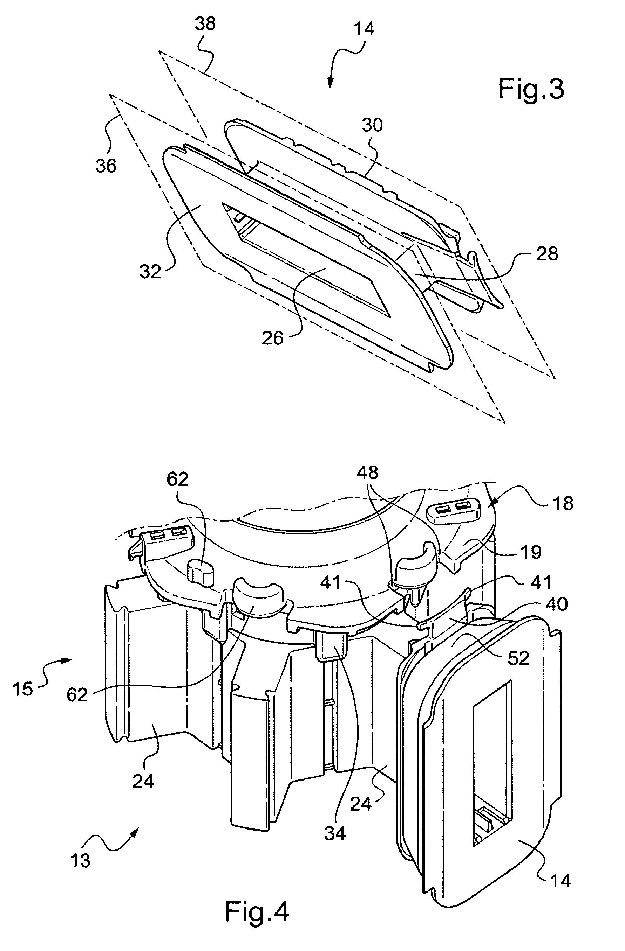

La figure 3 montre un support 14 de bobine. Le support 14 comporte une lumière 26 pour recevoir la branche 24 correspondante. Le support 14 comporte une piste 28 d'enroulement du fil. La piste 28 est autour de la lumière 26 et permet la création de la bobine par enroulement du fil. Le courant circulant dans le fil bobiné sur la piste 28 d'enroulement permet la création d'un champ magnétique polarisant la branche 24 en métal correspondante de la bague 15. La piste 28 est délimitée par deux flasques 30, 32 traversés par la lumière 26. Les flasques 30, 32 permettent le confinement et la protection du fil bobiné sur la piste 28. Les flasques 30, 32 sont transversaux à la direction du champ magnétique créé par la bobine.

La figure 4 montre le stator 13 dans un état partiellement assemblé. La coupelle 18 comporte un disque 19 s'étendant radialement par rapport à l'axe 16 de passage du rotor. Le disque 19 maintient la connectique 20. La coupelle 18 est ajustée en position sur la bague 15 par des ergots 34. Un support 14 de bobine avec un fil 52 bobiné sur le support est représenté sur la figure 4 dans une position en retrait d'une position emboîtée dans le support 14. Les différentes positions des supports 14 sont présentées dans ce qui suit.

La figure 1 montre les supports 14 dans une position emboîtée et dans laquelle une branche 24 est complètement introduite et emboîtée à travers la lumière 26 du support 14 correspondant. Dans la position emboîtée, la branche 24 peut être en saillie d'une face du support 14 opposée à la face du support 14 qui est tournée vers la bague 15. L'extrémité libre 25 des branches en saillie coopère avec l'élément annulaire 21 tels que des queues d'aronde. L'élément annulaire 21 maintient les supports 14 dans la position emboîtée. Dans la position emboîtée, et selon une vue le long de l'axe 16, les supports 24 sont sous la coupelle 18, ou plus précisément, sous le disque 19. En d'autres termes, les plans d'enroulement 36, 38 et la piste d'enroulement 28 des supports 14 sont sous la coupelle 18. Ceci permet d'avoir une compacité radiale du stator et donc un gain en place une fois le stator monté dans un moteur. En outre, dans la position emboîtée, il peut être prévu que les supports 14 de bobine soit fixés à la coupelle 18 par des organes de fixation 50 visibles sur la figure 1. Les supports 14 sont par exemple fixés par clipsage. La fixation des supports 14 à la coupelle 18 permet le blocage en translation le long de l'axe 16 de la coupelle. La position emboîtée des supports 14 radialement par rapport à la bague 15 et la fixation des supports 14 à la coupelle 18 confèrent au stator une robustesse accrue.

La position en retrait (ou position transitoire) est une position décalée radialement du support 14 par rapport à la bague 15 et par rapport à la position emboîtée. Dans la position en retrait, les supports de bobine ne sont pas sous la coupelle 18, selon une vue le long de l'axe 16. La position en retrait peut être une position dans laquelle la branche 24 est partiellement emboîtée dans le support de bobine. La position en retrait peut être aussi une position dans laquelle la branche 24 n'est pas emboîtée dans le support 14. En d'autres termes, la position en retrait peut être une position dans laquelle le support 14 est retiré de la branche 24 correspondante.

Le procédé de bobinage va maintenant être présenté. Le procédé comprend une étape de bobinage d'au moins deux supports 14 de bobine à l'aide d'un fil continu. Ceci permet de bobiner en continuité, sans rupture de fil. Bobiner (au moins) deux bobines, en particulier deux bobines appartenant à la même phase ou deux bobines inter-phases, c'est-à-dire deux bobines de deux phases différentes, présente l'intérêt, notamment économique, de ne pas utiliser de composant spécifique ni de soudure pour connecter les deux bobines. De plus, le temps de cycle est plus court. Les bobines sont par exemple diamétralement opposées sur le stator.

La réalisation du bobinage des supports de bobine est facilitée car les supports 14 de bobines sont portés par les branches 24 qui s'étendent vers l'extérieur de la bague 15. L'accès aux supports 14 est facilité. Le bobinage avec le fil continu peut être réalisé sur les supports 14 de bobine qui sont dans la position en retrait de la position emboîtée, telles que décrites ci-dessus. L'avantage est de pouvoir disposer de plus de place pour bobiner le fil sur les supports 14. En effet, dans la position en retrait de la position emboîtée, le support 14 n'est pas sous la coupelle 18, ce qui évite d'entraver le fil avec la coupelle. En outre, les supports peuvent être mis un à un en position en retrait, le temps de les bobiner. Lors du bobinage d'un support, ceci permet de ne pas entraver le fil avec les supports voisins. Selon la figure 3, il est donc possible de bobiner les supports entre les plans de bobinage 36 et 38. Un support 14 en cours de bobinage est sans voisinage. On dispose d'un rayon d'action tout autour de chaque support 14 qui ne serait pas disponible si les supports 14 étaient bobinés en position d'emboîtement. Les uns après les autres, les supports peuvent être déplacés de la position d'emboîtement vers la position en retrait, bobinés puis replacés en position d'emboîtement. La position en retrait permet de ne pas entraver le mouvement de l'aiguille avec la coupelle 18 ni avec un support 14 de bobine. Une fois remis en position d'emboîtement, les supports 14 sont sous la coupelle 18. Notamment, selon la figure 1, l'un des supports 14 mis en position d'emboîtement est tel que la connectique 20 se trouve entre les plans de bobinage 36 et 38.

On peut ainsi bobiner avec la technologie « flyer » qui permet des temps de cycle très courts. Par la technologie flyer, on fait tourner une aiguille portant le fil à très grande vitesse autour du support 14 à bobiner.

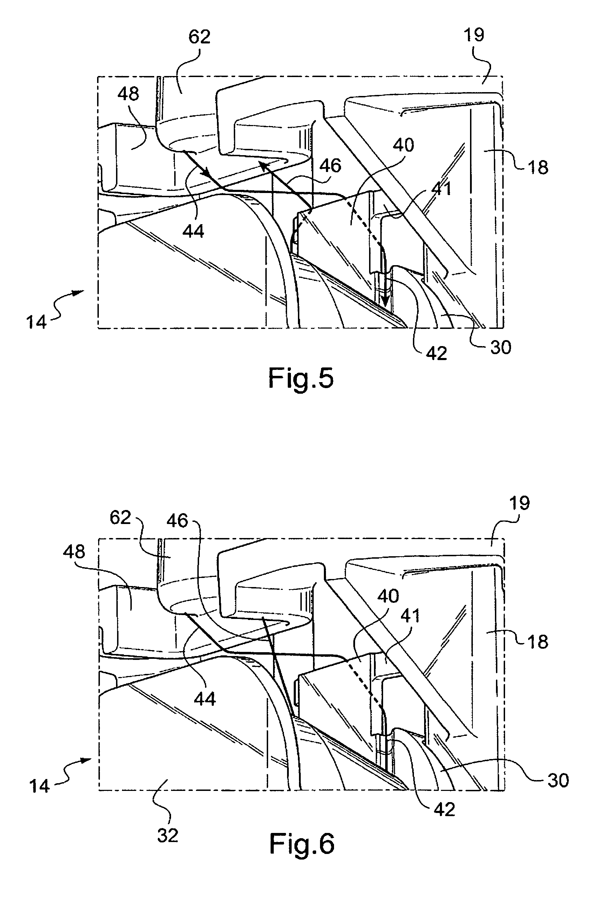

Les figures 5 à 7 montrent le bobinage du stator et notamment le bobinage des supports.

Les figures 5 et 6 montrent un détail du stator de la figure 1, à savoir, la position relative d'un support 14 de bobine et de la coupelle. Le support 14 comporte une saillie 40. La saillie 40 dépasse du flasque 30 tourné vers la coupelle et en direction du disque 19 de la coupelle 18. Le support 14 peut comporter des sillons 42 de part et d'autre de la saillie 40 sur le flasque 30.

Selon la figure 5, le brin de fil 44 parvient au support 14 en venant depuis la coupelle 18 du coté opposé à l'un des sillons 42 permettant au fil de descendre au fond du support 14 de bobine. Le brin de fil 44 reste tendu et se positionne dans le sillon 42 droit du support. Pour rester tendu, le brin de fil 44 passe sur la face de la saillie 40 qui est en regard de la coupelle 18. Le brin 44 passe « derrière » la saillie 40. Pour être mieux maintenue en place, la saillie 40 peut comporter des crochets de guidage 41. Notamment, les crochets 41 permettent le guidage du fil lors du parcours d'approche du flyer le cas échéant. La figure 4 montre un exemple de crochets 41 possible.

Puis le support 14 de bobine est bobiné dans la position en retrait. Le fil s'enroule autour de la lumière des supports dans la piste 28 entre les plans 36, 38. Les crochets 41 ne dépassent pas dans le volume délimité par les plans 36, 38 pour ne pas entraver le bobinage.

Le fil est sorti ensuite du support 14 de bobine et retourne vers la coupelle 18 comme c'est le cas du brin de fil 46. Le support 14 de bobine peut à nouveau disposer d'un crochet de guidage 41 (opposé à celui prévu pour l'entrée du fil) permettant la sortie du fil tendu vers la coupelle 18. Selon la figure 5, le brin de fil 46 est sorti à gauche de la bobine pour être dirigé à droite du support 14. La circulation du fil est choisie de sorte à permettre de ranger le fil par un mouvement simple du flyer le cas échéant.

De préférence, les deux crochets sont symétriques car les supports 14 peuvent être bobinés dans le sens horaire ou anti-horaire. Les formes de crochets 41 servent donc soit à l'arrivée, soit au départ du fil sur le support 14.

Après achèvement du bobinage d'un support dans la position en retrait, le support 14 est translaté vers sa position définitive emboîtée. Les deux brins de fil 44, 46 passent par une phase de détente le temps de la translation entre la position en retrait et la position emboîtée, puis sont à nouveau tendus à l'aide de la saillie 40 dans la position emboîtée. La saillie 40 sollicite les brins 44, 46 vers la coupelle, pour que le fil soit bien maintenu et pour garantir une bonne longévité du stator 13. Les deux crochets 41 permettent de gérer ces deux phases de détente et re-tension des brins de fil 44, 46. Notamment, la phase de détente du fil est gérée de façon à ce que le fil soit quand même guidé et soit naturellement recentré lors de la re-tension sans aucune dégradation.

Selon la figure 6, en fonction des types d'application, du type de fil, il est aussi envisageable que le support 14 soit déplacé vers sa position emboîtée sans que le brin de fil 46 passe par le crochet 41 de sortie. Toutefois, la forme symétrique des crochets 41 peut être maintenue car les supports peuvent être bobinés alternativement pour les sens horaires et anti-horaires. Sur la figure 6, seul le brin 46 passe entre la saillie 40 et la coupelle 18. Sur les figures 5 et 6, le brin de fil 44 parvenant au support et le brin de fil 46 provenant du support se croisent de sorte à assurer leur maintien en place lors de la translation des supports vers la position emboîtée après le bobinage. Le maintien en place est amélioré par les crochets 41.

Dans une position emboîtée des supports 14 sur la bague 15, les supports 14 de bobine maintiennent en tension au moins un brin de fil continu parmi le brin 44 de fil parvenant au support de bobine et le brin 46 de fil provenant du support de bobine, de préférence les deux brins. Ceci assure une plus grande longévité du stator. La saillie 40 permet la mise en tension d'au moins l'un des brins de fil continu parmi le brin 44 de fil parvenant au support de bobine et le brin 46 de fil provenant du support de bobine, de préférence les deux brins. La saillie 40 permet de réaliser simplement le maintien en tension.

Comme le montrent les figures 4, 5, 6, 7, La coupelle 18 peut comporter des formes 62 permettant le parcours du fil (et du flyer le cas échéant) le plus simple et direct. Il en résultera de meilleurs temps de cycle lors du bobinage. Deux bobines opposées peuvent être bobinées en sens contraire et sont connectées. Le fait que le fil arrive sur le support 14 par le coté opposé au sillon 42 permet d'avoir un parcours direct du fil sur la coupelle. Ceci permet d'avoir un parcours simple pour le flyer le cas échéant, d'avoir un temps de cycle court, et de générer peu de contrainte pour le fil. Les figures 4-6 présentent un exemple de coupelle 18 permettant d'avoir de bons guidages pendant les phases entrée du fil, sortie du fil et translation du support-bobine grâce, par exemple, à des encoches 48 dans la coupelle 18. En fonction des schémas de bobinage, il convient d'aménager des formes douces pour le fil. Le parcours du fil étant connu et répété, il peut être souhaitable d'aménager des sillons sur la coupelle permettant de protéger le fil sur son parcours.

Les formes sur la coupelle sont simples à mettre en oeuvre et sont peu volumineuses. Ceci permet donc de réaliser le bobinage et toute la connectique d'alimentation avec une coupelle de faibles dimensions. Le stator dans son ensemble a donc aussi de faibles dimensions, ce qui permet de faciliter l'introduction de l'ensemble dans l'élément annulaire 21. Tous les appuis permettant la poussée de l'élément annulaire 21 sur le stator sont bien dégagés.

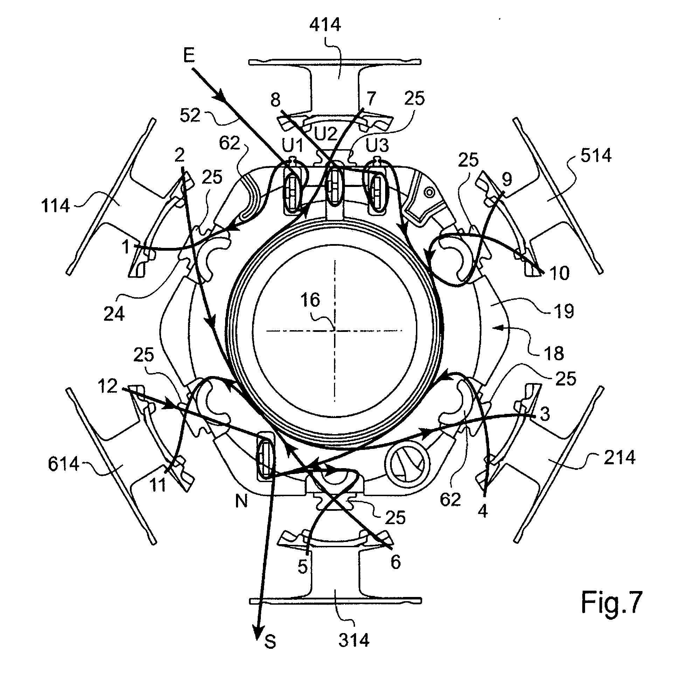

La figure 7 montre le parcours du fil 52 continu lors du bobinage du stator. A titre d'exemple, le stator 13 comporte, en tant que connectique d'alimentation 20, trois phases ou bornes U1, U2, U3 et six pôles obtenus par les six supports reçus par six branches 24. Avant le bobinage, les supports sont en position emboîtés. Ils sont individuellement translatés vers la position en retrait de sorte à laisser libre le rayon d'action autour des supports.

Le fil parvient en entrée E jusqu'à la borne U1 où le fil est enroulé et fixé. Le fil est ensuite acheminé vers le premier support 114 mis en position en retrait. Le fil passe par l'entrée 1, est bobiné autour du support 14, puis est ressorti par la sortie 2. Le fil, en étant continu, est acheminé vers le deuxième support 214 opposé et mis en position de retrait. Le fil passe par l'entrée 3, est bobiné autour du support 14, puis est ressorti par la sortie 4. Les deux supports 114 et 214 sont bobinés sans utilisation de connecteurs supplémentaires mais par la continuité du fil.

Par l'intermédiaire d'une fiche Neutre N, le fil est ensuite acheminé vers le troisième support 314 mis en position en retrait. Le fil passe par l'entrée 5, est bobiné autour du support 314, puis est ressorti par la sortie 6. Le fil, en étant continu, est ensuite acheminé vers le quatrième support 414 mis en position en retrait. Le fil passe par l'entrée 7, est bobiné autour du support 414, puis est ressorti par la sortie 8. Les deux supports 314 et 414 sont bobinés sans utilisation de connecteurs supplémentaires mais par la continuité du fil.

Le fil est acheminé ensuite sur la borne U2 puis U3 avant d'être acheminé vers le cinquième support 514 mis en position en retrait. Le fil passe par l'entrée 9, est bobiné autour du support 514, puis est ressorti par la sortie 10. Le fil, en étant continu, est acheminé vers le sixième support 614 opposé et mis en position de retrait. Le fil passe par l'entrée 11, est bobiné autour du support 614, puis est ressorti par la sortie 12. Les deux supports 514 et 614 sont bobinés sans utilisation de connecteurs supplémentaires mais par la continuité du fil.

Le fil est ensuite acheminé vers la fiche Neutre N avant de sortir. L'exemple de bobinage montré est un branchement en étoile des supports de bobine.

L'ensemble du stator peut être bobiné avec un fil 52 continu. Ceci facilite le bobinage du stator et rend le bobinage rapide. Aucune connexion supplémentaire entre les bobines n'est nécessaire. Toutes les bobines sont créées avec le même fil. La figure 7 montre un tel exemple. Il est envisageable de sectionner le fil à certains endroits du stator. Par exemple sur la figure 7, le fil 52 est sectionné entre les phases ou bornes U2 et U3. Toutefois, la section du fil continu a lieu postérieurement au passage à l'endroit de la section, par exemple au passage entre U2 et U3 sur la figure 7, ce qui n'interrompt pas la continuité du fil lors du bobinage du stator.

## Revendications

1. Procédé de bobinage d'un stator (13), comprenant :
- la fourniture d'un stator comprenant
- des supports (14) de bobines et
- une bague (15) comportant des branches (24) de réception des supports (14) de bobine, les branches (24) s'étendant radialement vers l'extérieur de la bague (15), et
- le bobinage d'au moins deux supports (14) de bobine à l'aide d'un fil continu.

2. Le procédé selon la revendication 1, dans lequel le bobinage avec le fil (52) continu est réalisé sur les supports (14) de bobine dans une position en retrait d'une position emboîtée des branches (24) dans les supports (14).

3. Le procédé selon la revendication 2, dans lequel la position en retrait des supports (14) correspond à une position des supports (14) décalée radialement par rapport à la bague (15) et par rapport à la position emboîtée des branches (24) dans les supports (14).

4. Le procédé selon l'une des revendications 1 à 3, dans lequel
- le bobinage des supports (14) de bobines est réalisé par l'intermédiaire d'une coupelle (18) portant une connectique (20) d'alimentation du stator
- le maintien des supports (14) de bobine à la bague (15) est réalisé par un élément annulaire (21), la connectique d'alimentation (20) du stator étant à l'intérieur du périmètre intérieur de l'élément annulaire.

5. Le procédé selon l'une des revendications 1 à 4, dans lequel, dans une position emboîtée des supports (14) sur la bague (15), les supports (14) de bobine maintiennent en tension au moins un brin de fil continu parmi le brin (44) de fil parvenant au support de bobine et le brin (46) de fil provenant du support de bobine, de préférence les deux brins.

6. Le procédé selon la revendication 5, dans lequel les supports de bobine comprennent
- une lumière (26) adaptée à recevoir la branche (24) respective de la bague (15),
- une piste d'enroulement (28) du fil autour de la lumière (26),
- une saillie (40) de mise en tension d'au moins un brin de fil continu parmi le brin de fil parvenant au support de bobine et le brin de fil provenant du support de bobine, de préférence les deux brins.

7. Le procédé selon l'une des revendications 1 à 6, dans lequel le bobinage du fil est réalisé par bobinage successif des supports (14) et par connexion du fil avec une connectique d'alimentation (20) du stator qui est portée par une coupelle.

8. Le procédé selon la revendication 1 à 7, comprenant en outre la section du fil continu entre deux phases de la connectique d'alimentation (20).

9. Le procédé selon l'une des revendications 1 à 8, dans lequel deux supports de bobine bobinés avec le fil continu appartiennent à une même phase du stator ou à deux phases différentes du stator.

10. Le procédé selon l'une des revendications 1 à 9, dans lequel la bague est monobloc.

11. Un stator (13) obtenu par le procédé selon l'une des revendications 1 à 10, ledit stator comprenant
- des supports (14) de bobines,
- une coupelle (18) maintenant une connectique d'alimentation (20) du stator,
- des supports (14) de bobines bobinées à l'aide d'un fil continu entre au moins deux supports (14) de bobine par l'intermédiaire de la coupelle (18),
- une bague (15) comportant des branches de réception des supports de bobine, les branches s'étendant radialement vers l'extérieur de la bague.

12. Le stator selon la revendication 11, dans lequel la coupelle (18) a un passage de rotor et un disque (19) de maintien de la connectique d'alimentation (20) du stator, les supports (14) sont sous le disque (19) dans une position d'emboîtement des branches (24) dans les supports (14), selon une vue le long d'un axe (16) du passage de rotor.

13. Le stator selon la revendication 11 ou 12, dans lequel les supports de bobine (14) comportent une piste d'enroulement du fil qui est sous la coupelle (18) dans la position d'emboîtement des branches (24) dans les supports (14), selon une vue le long de l'axe (16) du passage de rotor.

## Patentansprüche

1. Verfahren zum Wickeln eines Stators (13), welches umfasst:
- das Bereitstellen eines Stators, welcher umfasst
- Spulenträger (14) und
- eine Hülse (15), welche Schenkel (24) zur Aufnahme der Spulenträger (14) aufweist, wobei sich die Schenkel (24) von der Hülse (15) aus radial nach außen erstrecken, und
- das Wickeln von wenigstens zwei Spulenträgern (14) mithilfe eines durchgehenden Drahtes.

2. Verfahren nach Anspruch 1, wobei das Wickeln mit dem durchgehenden Draht (52) auf den Spulenträgern (14) in einer aus einer in die Träger (14) eingefügten Position der Schenkel (24) zurückgezogenen Position durchgeführt wird.

3. Verfahren nach Anspruch 2, wobei die zurückgezogene Position der Träger (14) einer Position der Träger (14) entspricht, die bezüglich der Hülse (15) und bezüglich der in die Träger (14) eingefügten Position der Schenkel (24) radial verschoben ist.

4. Verfahren nach einem der Ansprüche 1 bis 3, wobei
- das Wickeln der Spulenträger (14) über einen Teller (18) durchgeführt wird, der Anschlusselemente (20) zur Speisung des Stators trägt,
- das Halten der Spulenträger (14) an der Hülse (15) durch ein ringförmiges Element (21) erfolgt, wobei sich die Anschlusselemente (20) zur Speisung des Stators innerhalb des Innenumfangs des ringförmigen Elements befinden.

5. Verfahren nach einem der Ansprüche 1 bis 4, wobei in einer eingefügten Position der Träger (14) auf der Hülse (15) die Spulenträger (14) wenigstens einen durchgehenden Drahtabschnitt von dem Drahtabschnitt (44), der zu dem Spulenträger führt, und dem Drahtabschnitt (46), der von dem Spulenträger kommt, vorzugsweise beide Drahtabschnitte, gespannt halten.

6. Verfahren nach Anspruch 5, wobei die Spulenträger umfassen:
- eine Öffnung (26), die dazu eingerichtet ist, den jeweiligen Schenkel (24) der Hülse (15) aufzunehmen,
- eine Bahn zum Wickeln (28) des Drahts um die Öffnung (26) herum,
- einen Vorsprung (40) zum Anlegen von Spannung an wenigstens einen durchgehenden Drahtabschnitt von dem Drahtabschnitt, der zu dem Spulenträger führt, und dem Drahtabschnitt, der von dem Spulenträger kommt, vorzugsweise an beide Drahtabschnitte.

7. Verfahren nach einem der Ansprüche 1 bis 6, wobei das Wickeln des Drahtes durch aufeinander folgendes Wickeln der Träger (14) und durch Verbindung des Drahtes mit einem Anschlusselement (20) zur Speisung des Stators, welches von einem Teller getragen wird, durchgeführt wird.

8. Verfahren nach einem der Ansprüche 1 bis 7, welches außerdem das Durchtrennen des durchgehenden Drahtes zwischen zwei Phasen der Anschlusselemente (20) zur Speisung umfasst.

9. Verfahren nach einem der Ansprüche 1 bis 8, wobei zwei Spulenträger, die mit dem durchgehenden Draht bewickelt sind, zu ein und derselben Phase des Stators oder zu zwei verschiedenen Phasen des Stators gehören.

10. Verfahren nach einem der Ansprüche 1 bis 9, wobei die Hülse aus einem Stück besteht.

11. Stator (13), der mit dem Verfahren nach einem der Ansprüche 1 bis 10 erhalten wird, wobei der Stator umfasst:
- Spulenträger (14),
- einen Teller (18), der Anschlusselemente (20) zur Speisung des Stators hält,
- Spulenträger (14), die über den Teller (18) mithilfe eines durchgehenden Drahtes zwischen wenigstens zwei Spulenträgern (14) gewickelt sind,
- eine Hülse (15), welche Schenkel zur Aufnahme der Spulenträger aufweist, wobei sich die Schenkel von der Hülse aus radial nach außen erstrecken.

12. Stator nach Anspruch 11, wobei der Teller (18) einen Rotordurchlass und eine Scheibe (19) zum Halten der Anschlusselemente (20) zur Speisung des Stators aufweist, die Träger (14) sich in einer Position des Einfügens der Schenkel (24) in die Träger (14) unter der Scheibe (19) befinden, entlang einer Achse (16) des Rotordurchlasses gesehen.

13. Stator nach Anspruch 11 oder 12, wobei die Spulenträger (14) eine Bahn zum Wickeln des Drahts aufweisen, welche sich in der Position des Einfügens der Schenkel (24) in die Träger (14) unter dem Teller (18) befindet, entlang der Achse (16) des Rotordurchlasses gesehen.

## Claims

1. Method for winding a stator (13), comprising:
- supplying a stator comprising
- supports (14) for the windings and
- a ring (15) comprising branches (24) for receiving the supports (14) for the windings, the branches (24) extending radially toward the outside of the ring (15), and
- winding of at least two supports (14) for the windings using a continuous wire.

2. The method according to claim 1, in which the winding using the continuous wire (52) is carried out on the supports (14) for the windings in a position set back from an engaged position of the branches (24) into the supports (14).

3. The method according to claim 2, in which the position set back from the supports (14) corresponds to a position of the supports (14) radially offset with regard to the ring (15) and with regard to the engaged position of the branches (24) into the supports (14).

4. The method according to one of claims 1 to 3, in which
- the winding of the supports (14) for the windings is carried out by the intermediary of a dish (18) carrying a system of connections (20) for supplying the stator
- the holding of the supports (14) for the windings at the ring (15) is carried out by an annular element (21), the system of connections (20) for supplying the stator being inside the internal perimeter of the annular element.

5. The method according to one of claims 1 to 4, in which, in an engaged position of the supports (14) on the ring (15), the supports (14) for the windings keep at least one length of continuous wire selected from the length (44) of wire reaching the support for the winding and the length (46) of wire originating from the support for the winding, preferably both lengths, tensioned.

6. The method according to claim 5, in which the supports for the windings comprise
- an aperture (26) adapted to receive the respective branch (24) of the ring (15),
- a winding track (28) for the wire around the aperture (26),
- a projection (40) for tensioning at least one continuous length of wire selected from the length of wire reaching the support for the winding and the length of wire originating from the support for the winding, preferably both lengths.

7. The method according to one of claims 1 to 6, in which the winding of the wire is carried out by successive winding of the supports (14) and by connection of the wire with a system of connections (20) for supplying the stator which is carried by a dish.

8. The method according to claims 1 to 7, further comprising the section of continuous wire between two phases of the system of connections (20) for power supply.

9. The method according to one of claims 1 to 8, in which two supports for the windings, wound with the continuous wire belong to a same phase of the stator or to two different phases of the stator.

10. The method according to one of claims 1 to 9, in which the ring is of a one-piece construction.

11. A stator (13) obtained by the method according to one of claims 1 to 10,
said stator comprising
- supports (14) for the windings,
- a dish (18) maintaining a system of connections (20) for supplying the stator,
- supports (14) for the windings, wound with a continuous wire between at least two supports (14) for the windings by the intermediary of the dish (18),
- a ring (15) comprising branches for receiving the winding supports, the branches extending radially towards the outside of the ring.

12. The stator according to claim 11, in which the dish (18) has a passage for the rotor and a disc (19) for holding the system of connections (20) for supplying the stator, the supports (14) are under the disc (19) in an engagement position of the branches (24) into the supports (14), according to a view along an axis (16) of the passage for the rotor.

13. The stator according to claim 11 or 12, in which the supports for the windings (14) comprise a winding track for the wire which is under the dish (18) in the position of engagement of the branches (24) into the supports (14), according to a view along the axis (16) of the passage for the rotor.
